# FASCICULE DE BREVET EUROPEEN

(11) **EP 1 774 299 B1**
(45) Date de publication et mention de la délivrance du brevet: **30.03.2011**
(21) Numéro de dépôt: 05791137.2
(22) Date de dépôt: 18.07.2005
(51) Int. Cl.: G01N 21/952

(54) **ANALYSE DE SURFACE D'UN OBJET ALLONGE**
OBERFLÄCHENANALYSE EINES LÄNGLICHEN OBJEKTS
SURFACE ANALYSIS OF AN ELONGATED OBJECT

(30) Priorité: 16.07.2004 FR 0407893
(43) Date de publication de la demande: 18.04.2007
(73) Titulaire: FARDEAU, Jean-Francois, F-13170 Les Pennes-Mirabeau (FR)
(72) Inventeur: FARDEAU, Jean-Francois, F-13170 Les Pennes-Mirabeau (FR)
(74) Mandataire: Maureau, Philippe
(86) Numéro de dépôt international: PCT/FR2005/001832
(87) Numéro de publication internationale: WO 2006/008402

(56) Documents cités:
- EP-A- 0 119 565
- EP-A- 0 841 560
- GB-A- 1 390 278
- US-A- 4 350 170
- US-A- 4 616 139
- US-A- 4 645 921

## Description

La présente invention concerne un dispositif et un procédé d'analyse de l'état de surface d'un objet allongé tel qu'un fil une fibre, un câble, un profilé long ou analogue. L'application principale concerne les lignes de fabrication, produisant généralement à grande vitesse. L'invention consiste à mesurer l'état de surface (rugosité), à détecter des défauts de surface (aspect), de forme, de couleur, cela de façon très fine, et à les caractériser (surface, forme).

On connaît déjà des dispositifs destinés à la détection de défauts à la surface d'un fil ou d'un tuyau.

Le document EP 0 841 560 décrit un appareil dans lequel on introduit un tuyau en plastique en vue de contrôler son état de surface. Six sources lumineuses fixes sont disposées sur un cercle concentrique au tuyau. L'éclairage permanent des sources, de façon radiale, illumine une portion annulaire du tuyau de faible longueur axiale. Chacun des six capteurs répartis autour du tuyau reçoit la lumière diffusée par ce dernier en provenance des six sources permanentes.

Un défaut de forme à la surface du tuyau est détecté par la modulation de l'énergie globale reçue par les capteurs, sans que l'on puisse en déterminer précisément la position, ni la surface. L'appareil décrit dans le document EP 0 841 560 ne présente donc pas une bonne résolution. Il se borne à révéler la présence d'un défaut significatif mais ne permet pas une détection précise de la localisation et de la taille de ce défaut. Il ne répond pas aux performances requises pour les applications visées.

Les dispositifs décrits dans les documents US 4 616 139 et US 4 645 921, bien que construits différemment, présentent les mêmes similitudes et limitations.

Le document EP 0 119 565 décrit un dispositif de contrôle optique différent pour la localisation de défauts de surface dans des câbles. Une source lumineuse déviée par un miroir oscillant est dirigée successivement vers différents miroirs fixes qui, à leur tour, réfléchissent la lumière vers le câble. Chaque miroir fixe renvoie des faisceaux divergents, produisant ainsi un balayage séquentiel d'autant de sections de câble qu'il y a de miroirs. La lumière diffusée par le câble est captée par deux capteurs placés dans deux demi sphères intégratrices. On observe les défauts par l'énergie qu'ils diffusent dans tout l'espace. Le balayage séquentiel devrait permettre de localiser le défaut sur la surface. Cependant, l'illumination n'est pas radiale et la localisation dépend fortement de la position du câble. Ce dispositif, comme les autres, exploite l'énergie diffusée, qui varie dans ce cas selon l'incidence du faisceau sur la surface du câble et qui ne permet pas la caractérisation fine des défauts. N'observant pas l'énergie réfléchie directe, ce dispositif ne permet pas de caractériser l'état de surfaces quasi miroirs. En outre, la fréquence de balayage de ce dispositif atteint difficilement 3kHz.

Le document US 4 350 170 décrit un appareil pour contrôler l'extérieur d'une cigarette.

La présente invention vise à remédier aux limitations des inventions précédentes mentionnées ci-dessus et a proposer un dispositif et un procédé permettant d'analyser en continu, de façon très fine, la surface d'un objet, de préférence cylindrique, d'en mesurer l'état de surface (rugosité) même quasi miroir, d'en détecter et caractériser des défauts (surface, dimension, localisation).

A cet effet, et selon un premier aspect, l'invention concerne un dispositif d'analyse de l'état de surface d'un objet allongé tel qu'un fil ou analogue, conforme à la revendication 1.

Par « le faisceau réfléchi formé par la réflexion directe et parfaite », on entend le faisceau qui serait réfléchi par une zone de surface sans défaut de l'objet (cylindrique), et ferait également un angle α avec l'axe de l'anneau des sources, symétrique de l'angle du faisceau incident En d'autres termes, les photo détecteurs sont disposés de sorte qu'ils reçoivent toujours une partie du reflet direct des sources sur l'objet.

Le cône d'émission des sources est assez large pour illuminer toute une zone autour de l'axe, dite zone de mesure, avec une densité spatiale d'énergie sensiblement constante. Le faisceau incident principal correspond à l'axe principal d'émission.

D'une façon avantageuse, mais non nécessaire selon les applications, la surface émettrice des sources est de préférence aussi petite que possible, par exemple inférieure à 5 mm², et typiquement inférieure à 0,1 mm², produisant un faisceau quasi divergeant et un seul reflet direct vu de chacun des trois photo détecteurs. A un instant donné, une unique source émet. Seuls deux photo détecteurs sont actifs simultanément selon la position angulaire de la source émettrice, et donc deux reflets différents d'une même source sont mesurés simultanément. Le photo détecteur le plus opposé angulairement à la source émettrice n'est pas actif.

On commute séquentiellement la seule source active de source en source dans l'anneau pour balayer circulairement autour de l'objet l'incidence angulaire des faisceaux sources et provoquer ainsi le balayage angulaire des reflets sur la surface de l'objet. Cette méthode permet l'observation fine et séquentielle de toute la surface de l'objet, point à point, avec la localisation précise des points.

La résolution angulaire (pas angulaire) «Rf» des points réfléchis sur la surface de l'objet ne dépend que de la résolution angulaire des sources (Rs). On a Rf = Rs/2. La conséquence est que le nombre de points sur l'objet est deux fois supérieur au nombre de sources. La résolution spatiale « Rp » est elle proportionnelle au Rayon « r » des objets, soit Rp = r*Rf. La taille des points sur la surface dépend de la surface de la source et du cône d'acceptance.

Pour obtenir une bonne résolution spatiale « Rp », selon les applications, on cherchera des sources de petite surface émettrice, des cônes d'acceptance petits, en accord avec la sensibilité des capteurs et un nombre de sources approprié à la résolution recherchée.

Ainsi, le fait que les photo détecteurs reçoivent le maximum de lumière réfléchie indique l'absence de défaut et caractérise l'état de surface. On peut donc, grâce au dispositif selon l'invention, effectuer une analyse de la totalité de la surface de l'objet, y compris dans le cas de fils quasi miroir.

En outre, l'émission de lumière inclinée d'un angle α permet aux sources de ne pas générer de reflets parasites sur les sources opposées observées par les photo détecteurs.

A chaque photo détecteur est associé un système optique pour collecter l'énergie lumineuse réfléchie, disposés entre le photo détecteur et la zone de mesure.

Les photo détecteurs et leurs systèmes optiques seront donc placés sur un même axe, selon un angle sensiblement symétrique à l'angle d'incidence principal des sources par rapport à l'axe de l'anneau et passant par le point d'intersection entre les faisceaux incidents principaux et l'axe de l'anneau. Le système optique doit permettre d'accepter des variations de la position des réflexions quand l'objet oscille dans la zone de mesure.

Le système optique et la surface sensible du capteur définissent un cône d'acceptance, qui détermine la taille des reflets observés sur l'objet et donc la résolution des mesures. Cette disposition rend la mesure peu dépendante de la vibration ou de la position de l'objet par rapport à l'axe de l'anneau.

Le plan des photo détecteurs est par exemple sensiblement symétrique du plan des sources par rapport au point d'intersection entre les faisceaux incidents et l'axe de l'anneau.

Le dispositif comprend des moyens destinés à provoquer l'activation individuelle et successive des sources de façon localisée et tournante sur l'anneau, afin de générer un faisceau incident tournant pour provoquer des reflets tournants à la surface de l'objet en direction des photo détecteurs. Il permet éventuellement de réguler la puissance lumineuse émise par chaque source afin que l'ensemble des sources de l'anneau émette une énergie constante, quelles que soient leurs caractéristiques individuelles. Les variations de l'énergie réfléchie ne correspondent alors plus qu'aux variations de l'état de surface, rugosité, forme, aspect, couleur.

Le dispositif peut en outre comprendre une lentille disposée entre chaque photo détecteur et le point d'intersection entre les faisceaux incidents principaux et l'axe de l'anneau, pour collecter l'énergie réfléchie par l'objet et la diriger vers les photo détecteurs.

Les applications principales du dispositif concernent les lignes de production (tréfilage, extrusion, fibrage) où l'objet avance sur son axe à grande vitesse. Dans ce cas le balayage des reflets sur la surface de l'objet correspond à une hélice dont le pas (résolution longitudinale ou axiale) dépend de la vitesse de rotation des sources et de la vitesse d'avance de l'objet sur son axe.

Avec par exemple 100 sources sur l'anneau, commutées à la fréquence de 20MHz, on réalise 20*10⁶/100 =200 000 rotations par seconde autour de l'objet. Si l'objet avance en production à la vitesse maximale de 30 mètres par seconde, la résolution longitudinale sur l'objet, entre deux rotations, serait de 0,15 mm. La résolution sur la circonférence serait de 200 points, deux fois le nombre de sources.

En reliant le dispositif à un instrument externe fournissant la mesure de la vitesse de l'objet, on connaît à tout instant le déplacement de l'objet. L'invention permet ainsi de déterminer non seulement s'il existe des défauts de surface, mais également d'en déterminer précisément la position et les dimensions circonférentielles et axiales. Ce dispositif permet d'observer toute la surface d'un cylindre en mouvement axial, par un balayage hélicoïdal point par point de la surface de l'objet, et de générer une image développée de cette surface, de façon très précise et très rapide. On peut ainsi réaliser une analyse fine des caractéristiques des défauts.

Le dispositif peut comprendre au moins 10 sources sensiblement régulièrement réparties en anneau.

Une lentille torique peut être placée entre l'anneau des sources et l'axe de l'anneau, de façon centrée sur ledit axe, afin de concentrer les faisceaux incidents en une ligne fine au voisinage de l'axe.

Par exemple, le dispositif comprend au moins trois photo détecteurs régulièrement espacés angulairement les uns des autres.

Il comprend également un dispositif d'acquisition et de comparaison des signaux des photo détecteurs permettant de mesurer les variations de l'énergie reçue par les photo détecteurs, d'en localiser l'origine à la surface de l'objet et de dimensionner les défauts.

Selon un deuxième aspect, l'invention concerne un procédé d'analyse de l'état de surface d'un objet allongé tel qu'un fil ou analogue, comprenant les étapes consistant à :
- prévoir une pluralité de sources lumineuses disposées sensiblement en anneau, lesdites sources étant aptes à émettre chacune un faisceau incident dirigé vers l'axe de l'anneau et formant avec ledit axe un angle (α) non droit et non nul ;
- placer l'objet sensiblement selon l'axe de l'anneau, une zone à analyser de la surface de l'objet, sensiblement annulaire, étant placée sur le trajet des faisceaux incidents ;
- prévoir au moins trois photo détecteurs situés dans un plan sensiblement parallèle à l'anneau des sources, lesdits photo détecteurs étant disposés de sorte que chaque faisceau réfléchi formé par la réflexion directe et parfaite sur l'objet d'un faisceau incident puisse être reçu par au moins deux des trois photo détecteurs ;
- activer individuellement et successivement les sources, de façon tournante sur l'anneau, pour produire un balayage circonférentiel des reflets à la surface de l'objet reçus par les photo détecteurs qui mesurent l'énergie reçue point à point.

Un changement de l'état de surface, la présence d'un défaut de forme, d'une irrégularité de la surface de l'objet, ou d'une modification de la couleur de la surface de l'objet est déterminée par la mesure de la variation de l'énergie réfléchie et reçue par au moins deux photo détecteur.

Le procédé peut en outre comprendre l'étape consistant à déplacer progressivement l'objet le long de l'axe de l'anneau afin d'analyser par scrutation spiralée la totalité de la surface de l'objet.

On décrit ci-après, à titre d'exemple non limitatif, une forme de réalisation possible de l'invention, en référence aux figures annexées :
La figure 1 est une vue schématique partielle en perspective du dispositif selon l'invention ;
Les figures 2 et 3 sont des vues schématiques partielles du dispositif de la figure 1, vu radialement, respectivement axialement ;
La figure 4 est une vue partielle illustrant le principe de la mesure de l'état de surface d'un fil ;
La figure 5 illustre la résolution angulaire des sources et la résolution angulaire sur le fil ;
La figure 6 est un schéma d'un dispositif électronique de traitement des signaux reçus par les photo détecteurs du dispositif selon l'invention ;
La figure 7 est une vue similaire à la figure 4, montrant une variante avec un diaphragme ; et
La figure 8 est une vue de dessus du diaphragme de la figure 7.

Le dispositif 1 permet de contrôler la qualité de la surface d'un objet allongé, de préférence rond mais non exclusivement, tel qu'un fil 2 ou analogue. Le fil 2 est par exemple produit en continu, l'analyse étant effectuée en permanence en sortie de filière. Il peut par exemple s'agir d'un fil métallique (acier, acier inoxydable, etc.), d'un câble électrique en cuivre, d'un fil parfaitement réfléchissant (fil d'or) d'une fibre optique, etc., mais également d'un profilé long (barre, etc.).

Le dispositif 1 comprend un support 3 constitué d'un anneau métallique et d'un circuit imprimé souple sur lequel sont montées des sources lumineuses 4. Les sources 4 peuvent être des diodes électroluminescentes ou des diodes lasers ou des dispositifs d'émission de petites dimensions. Il s'agit dans ce cas de LED en boîtier cms de 1 x 1,5 mm de surface avec une partie émissive de 0,2 mm de diamètre (0,03 mm²). Le dispositif 1 comprend ainsi un nombre important de sources 4, pouvant dépasser 20, voire dépasser 50, disposées dans un plan et sensiblement régulièrement réparties sur un anneau d'axe 5 orthogonal audit plan.

A titre d'exemple, l'anneau des sources 4 peut présenter un diamètre de l'ordre de 40 mm, pour des fils 2 d'un diamètre compris entre 20 µm et 5 mm, de préférence inférieur à 2 mm. On peut imaginer des dimensions plus grandes ou plus petites pour des applications particulières.

Les sources 4 émettent chacune un faisceau incident 6 principal dirigé vers l'axe 5 et incliné par rapport à celui-ci d'un angle α supérieur à 70°, et par exemple de l'ordre de 85°. L'ensemble des faisceaux incidents 6 forme donc un cône d'angle au sommet α et de sommet 7. Le sommet 7 est l'intersection entre les faisceaux incidents 6 et l'axe 5.

Le dispositif 1 comprend également trois photo détecteurs 8a, 8b, 8c disposés dans un plan sensiblement parallèle au plan des sources 4 et symétrique de celui-ci par rapport au sommet 7 du cône formé par les faisceaux incidents 6.

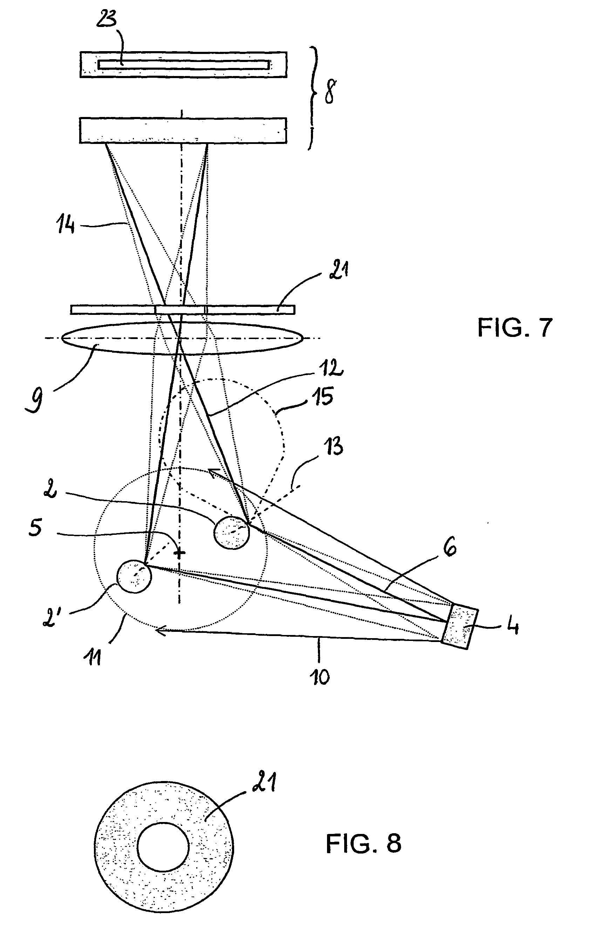

Un système optique constitué d'une lentille 9 et éventuellement d'un diaphragme 21 (figure 7) est en outre placé entre chaque photo détecteur 8 et le sommet 7 sur le même axe, pour collecter et projeter sur le photo détecteur 8 l'énergie réfléchie sur l'objet 2, de façon adéquate.

Les trois photo détecteurs 8 et leurs systèmes optiques sont espacés angulairement de 120° les uns des autres. La surface d'émission conique des sources 4 permet aux sources 4 de ne pas générer de reflets parasites sur les sources opposées observées par les photo détecteurs 8.

L'intersection de l'ensemble des cônes 10 des faisceaux incidents 6 des sources 4 définit une zone cylindrique centrée sur l'axe 5, dite « zone de mesure 11 ». Le fil 2 dont la surface doit être analysée est placé dans la zone de mesure 11, de préférence orthogonalement au plan des sources 4 et sur l'axe 5.

On décrit deux configuration différentes du dispositif.

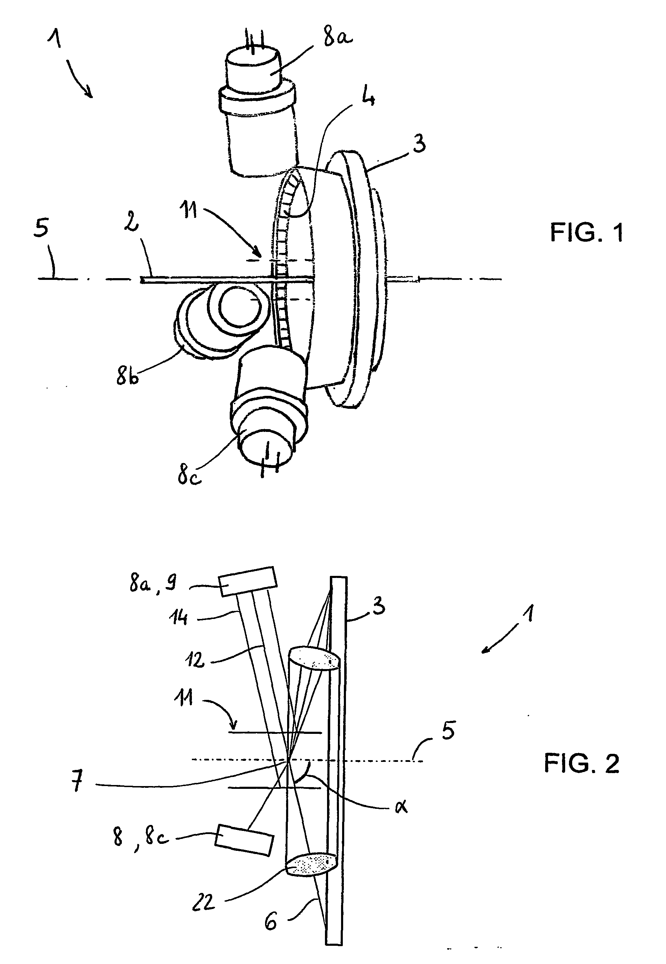

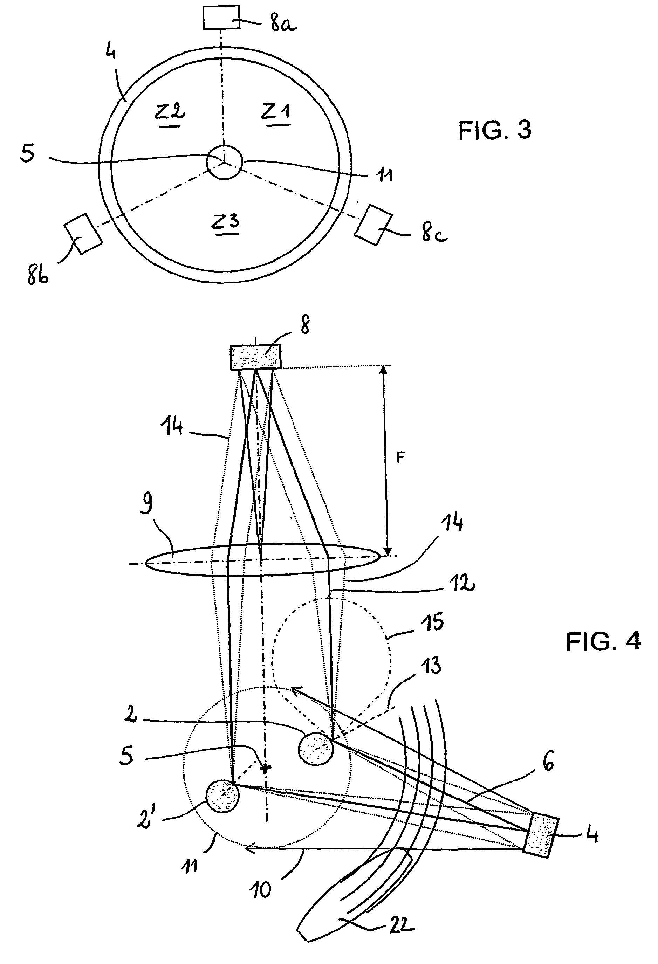

Sur les figures 2 et 4, une lentille torique 22 concentre les faisceaux incidents 6 des sources 4 en une fine ligne sur l'axe 5 et perpendiculairement à cet axe 5 dans toute la zone de mesure 11. Cette lentille torique 22 peut être réalisée en plastique usiné ou moulé avec des performances et un coût acceptable en volume.

Un objet 2 placé dans la zone de mesure, parallèlement à l'axe 5, sera donc illuminé par une ligne étroite sur sa circonférence. Tous les faisceaux réfléchis 12 sur l'objet 2 que reçoit le photo détecteur 8 proviennent de cette ligne qui définit la résolution axiale des mesures sur l'objet 2.

Le photo détecteur 8 est dans ce cas au plan focal de la lentille 9. Le cône d'acceptance est alors défini par la distance focale F de la lentille 9 et la surface sensible du photo détecteur 8. De ce fait, tous les faisceaux réfléchis 12 sur la surface de l'objet 2, quelle que soit la position de l'objet 2 dans la zone de mesure (vibrations) sont contenus dans un cône d'acceptance toujours orientés dans l'axe du système optique. Cela rend la mesure peu sensible à la position de l'objet. Ce dispositif s'applique bien aux fibres, aux fils très fins, en vibration à haute fréquence.

Sur la figure 7, les photo détecteurs 8 sont de forme linéaire, orientés perpendiculairement à l'axe 5. Ils sont placés à une distance de la lentille 9 de telle sorte que leurs images soient projetées au centre de la zone de mesure 11. On fait typiquement un rapport de grandissement de 1. Dans ce cas l'énergie réfléchie sur l'objet 2 reçue par les photo détecteurs 8 correspond à la surface des photo détecteurs 8 projetée sur l'objet 2. L'épaisseur de la ligne photosensible 23 du photo détecteur 8 détermine la résolution axiale sur l'objet 2. Le diaphragme 21 définit l'angle d'acceptance et la longueur du photo détecteur 8 détermine la zone de mesure. Cette disposition, plus simple que celle de la figure 4, offre une excellente résolution axiale et circonférentielle mais conduit naturellement à un plus grand besoin d'énergie incidente. Elle s'appliquera mieux aux produits extrudé ou fibrés de dimension moyenne.

Le principe fondamental des mesures est le même dans les deux configurations décrites ci-dessus. Il est le suivant ( sur les figures 4 et 7, une seule source 4 et un seul photo détecteur 8 ont été représentés pour simplifier).

Le faisceau incident 6 issu d'une source 4 arrive sur une zone du fil 2. Si cette zone présente un état de surface parfait (miroir), on obtient un faisceau réfléchi 12 symétrique du faisceau incident 6 par rapport à la normale 13 au fil 2 au point de réflexion considéré. Après passage par la lentille 9, le faisceau réfléchi 12 est dirigé vers le photo détecteur 8.

La mesure de l'état de surface du fil 2 est réalisée par la diffusion plus ou moins importante de l'énergie réfléchie. Si le fil est un miroir (fils d'or par exemple), la majeure partie de l'énergie des faisceaux incidents 6 sera incluse dans le cône d'acceptance 14. Si la surface n'est pas parfaite (rugosité), elle réfléchit les faisceaux incidents 6 dans un cône de diffusion 15 beaucoup plus large angulairement que le cône d'acceptance 14. A énergie incidente constante, l'énergie contenue dans le cône d'acceptance 14 sera donc bien plus faible, produisant une modulation importante de l'énergie reçue par le photo détecteur 8.

Pour des défauts de forme de la surface, c'est le changement d'angle de réflexion ou des absorptions localisées d'une crique qui fera la modulation de l'énergie réfléchie. Pour les couleurs, on peut aussi imaginer d'avoir trois photo détecteurs 8, avec filtre couleur, par lentille 9 pour faire de la colorimétrie (analyse des variations lumineuses des trois composantes fondamentales des couleurs), ces trois photo détecteurs 8 pouvant être décalés sur le fil 2 ou alignés optiquement.

Au cours de l'analyse, chaque source 4 est activée individuellement et séquentiellement de façon à effectuer une rotation circulaire d'une seule source émettrice autour du fil 2. On peut ainsi mettre en évidence les caractéristiques de la surface du fil 2 par scrutations successives de portions fines de la surface, puisqu'on observe via les photo détecteurs 8 la réflexion d'une seule source 4 à la fois, sur une portion angulaire réduite du fil 2.

N'utilisant que des composants statiques, l'invention permet d'effectuer un très grand nombre de rotations par seconde, limité par la technologie du moment. Dans la présente application, la fréquence de rotation est de 200 000 Hz, en accord avec les technologies utilisées. La mesure est donc très rapide.

Avec la figure 3, on voit que selon la position de la source active 4 sur l'anneau, séparé en trois zones, les photo capteurs actifs diffèrent. Ainsi, dans la zone Z1, les photo détecteurs 8a et 8c sont actifs, dans la zone Z2 les photo détecteurs 8a et 8b sont actifs, et dans la zone Z3 les photo détecteurs 8b et 8c sont actifs. Chacun des deux capteurs actifs perçoit un seul reflet d'une même source. Soit deux reflets différents sont perçus simultanément.

Sur les figures 4 et 7, on a représenté le fil dans une autre position à l'intérieur de la zone de mesure 11 (référence 2'), pour montrer l'incidence de la position du fil sur la direction des faisceaux incidents 6 et des faisceaux réfléchis 12. Si le fil 2 bouge à l'intérieur de la zone de mesure 11, une même source 4 n'illuminera pas exactement la même partie du fil 2 pour le même cône d'acceptance 14. En admettant que l'énergie des sources 4 soit très uniforme à l'intérieur de la zone de mesure 11, on voit que ce montage rend la mesure peu dépendante des vibrations et de la position du fil 2 dans la zone de mesure 11. Cette caractéristique est très importante, car cela permet d'effectuer des mesures de qualité même si le fil 2 n'est pas parfaitement centré sur l'axe 5 ou s'il est soumis à des vibrations au moment même de l'analyse.

Si la distance de la source 4 au fil 2 est de 50 mm, pour une amplitude totale de vibration du fil 2 de 4 mm, la variation angulaire de la zone de réflexion observable sur le fil 2 sera de : ½ .arctg (4 mm/50 mm) = 2,3°, quel que soit le diamètre.

Si l'on place 86 sources 4 de façon circulaire autour du fil 2, la résolution angulaire des mesures sur le fil sera de 360°/(86 x 2) = 2,1°.

Le temps de scrutation d'une circonférence étant très court, de l'ordre de 5 microsecondes par exemple, les vibrations du fil 2 sont proportionnellement très lentes (1000 fois plus faibles) et l'analyse reste continue même si un lent décalage angulaire a lieu lors du mouvement du fil 2.

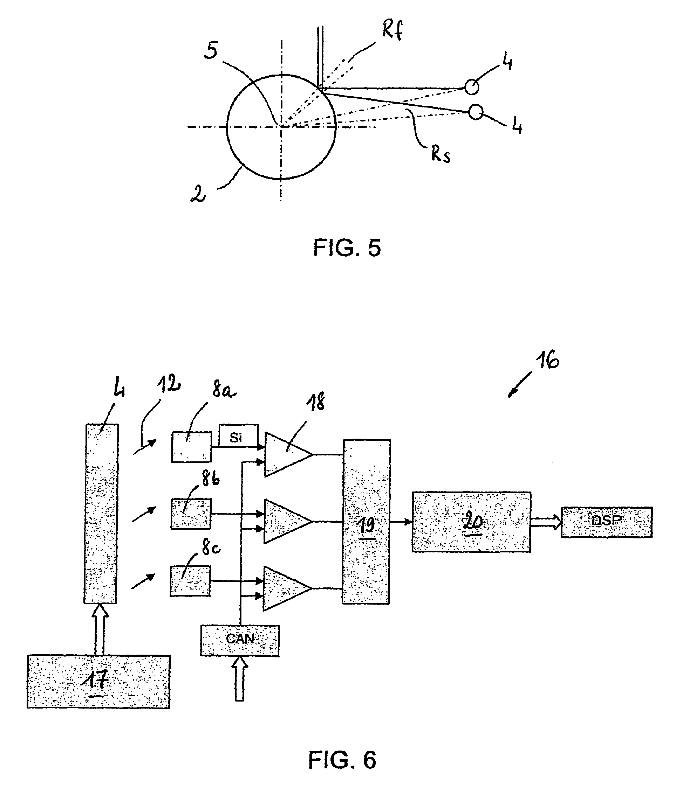

Un exemple de dispositif électronique 16 de traitement des signaux issus des photo détecteurs 8 est illustré sur la figure 6. Toutefois, d'autres dispositifs électroniques peuvent être envisagés, et ils peuvent être aussi complexes que souhaité selon l'application.

La fonction 17 assure la commutation logique des sources mais aussi la régulation du courant, source par source, pour maintenir une émission à énergie constante quelle que soit la dispersion des caractéristiques individuelles des sources 4. Ainsi, la variation de l'énergie des faisceaux réfléchis 12 reçus par les photo détecteurs 8a, 8b, 8c ne provient que des variations de l'objet (rugosité, forme, aspect, couleur). Dans le cas de l'état de surface d'un fil, on peut se contenter de trois ou quatre photo détecteurs 8 ou systèmes de réception optroniques répartis angulairement uniformément autour de l'objet à contrôler.

Chaque signal des photo-détecteurs 8 est comparé à un comparateur 18 dont le seuil de comparaison peut varier selon la position relative de la source 4. Selon les capteurs actifs, on valide ou non les sorties des comparateurs 18 par la logique 19 de sélection des voies. Quand un défaut est détecté, on peut amorcer un comptage du nombre de « points » en défaut par circonférence mais aussi un comptage du nombre de circonférences en association avec la vitesse axiale de l'objet pour disposer d'une mesure en deux dimensions de la surface des défauts du fil 2 via le dispositif 20. Cela tant que le même capteur ne fait pas un cycle sans défaut.

En parallèle aux comparateurs 18, les signaux analogiques des photo-detecteurs peuvent être enregistrés pour la génération d'une image développé de la surface du fil autour des défauts aux fins d'analyse ou de visualisation.

Ainsi, l'invention apporte une amélioration déterminante à la technique antérieure, en fournissant un dispositif d'analyse de l'état de surface d'un objet qui, tout en étant de construction simple et robuste, permet d'analyser toute la surface de l'objet, y compris en l'absence de défauts, et de localiser et quantifier précisément les défauts de forme, les irrégularités de surface, et les variations de couleur. On connaît en effet de façon non ambiguë, en fonction de la position de la source et des capteurs concernés, la localisation des défauts.

## Revendications

1. Dispositif d'analyse de l'état de surface d'un objet allongé tel qu'un fil (2) ou analogue, comprenant :
- une pluralité de sources lumineuses (4) disposées sensiblement en anneau dans un plan, lesdites sources (4) étant aptes à émettre chacune un faisceau incident (6) principal dirigé vers l'axe (5) de l'anneau, et étant agencées pour que les faisceaux incidents (6) principaux forment avec l'axe (5) de l'anneau un angle (α) non droit et non nul, l'objet (2) étant destiné à être placé au voisinage dudit axe (5) de sorte qu'une zone à analyser de la surface dudit objet (2) soit placée sur le trajet des faisceaux incidents (6) ;
- au moins trois photo détecteurs (8, 8a, 8b, 8c) situés dans un plan sensiblement parallèle à l'anneau des sources (4), les photo détecteurs (8) étant disposés de sorte que chaque faisceau réfléchi (12) formé par la réflexion directe et parfaite sur l'objet (2) d'un faisceau incident (6) puisse être reçu par au moins deux des trois photo détecteurs (8) ;
**caractérisé en ce qu'**il comprend des moyens destinés à provoquer l'activation individuelle et successive des sources (4) de façon localisée et tournante sur l'anneau, afin de générer un faisceau incident (6) tournant pour provoquer des reflets tournants à la surface de l'objet (2) en direction des photo détecteurs (8).

2. Dispositif selon la revendication 1, **caractérisé en ce qu'**il comprend en outre une lentille (9) disposée entre chaque photo détecteur (8) et le point d'intersection (7) entre les faisceaux incidents (6) principaux et l'axe (5) de l'anneau, pour collecter l'énergie réfléchie par l'objet (2) et la diriger vers les photo détecteurs (8).

3. Dispositif selon la revendication 1 ou 2, **caractérisé en ce qu'**il comprend au moins 10 sources (4) sensiblement régulièrement réparties en anneau.

4. Dispositif selon l'une des revendications 1 à 3, **caractérisé en ce qu'**il comprend une lentille torique (22) placée entre l'anneau des sources (4) et l'axe (5) de l'anneau, centrée sur ledit axe (5), permettant de concentrer les faisceaux incidents (6) en une ligne fine au voisinage de l'axe (5).

5. Dispositif selon l'une des revendications 1 à 4, **caractérisé en ce qu'**il comprend au moins trois photo détecteurs (8, 8a, 8b, 8c) régulièrement espacés angulairement les uns des autres.

6. Dispositif selon l'une des revendications 1 à 5, **caractérisé en ce qu'**il comprend un dispositif (16) d'acquisition et de comparaison des signaux des photo détecteurs (8) permettant de mesurer les variations de l'énergie reçue par les photo détecteurs (8), d'en localiser l'origine à la surface de l'objet (2) et de dimensionner les défauts.

7. Procédé d'analyse de l'état de surface d'un objet allongé tel qu'un fil (2) ou analogue, comprenant les étapes consistant à :
- prévoir une pluralité de sources (4) lumineuses disposées sensiblement en anneau dans un plan, lesdites sources (4) étant aptes à émettre chacune un faisceau incident (6) dirigé vers l'axe (5) de l'anneau et formant avec ledit axe (5) un angle (α) non droit et non nul;
- placer l'objet (2) sensiblement selon l'axe (5) de l'anneau, une zone à analyser de la surface de l'objet (2), sensiblement annulaire, étant placée sur le trajet des faisceaux incidents (6) ;
- prévoir au moins trois photo détecteurs (8, 8a, 8b, 8c) situés dans un plan sensiblement parallèle à l'anneau des sources (4), lesdits photo détecteurs (8) étant disposés de sorte que chaque faisceau réfléchi (12) formé par la réflexion directe et parfaite sur l'objet (2) d'un faisceau incident (6) puisse être reçu par au moins deux des trois photo détecteurs (8) ;
- activer individuellement et successivement les sources (4), de façon tournante sur l'anneau, pour produire un balayage circonférentiel des reflets à la surface de l'objet (2), reçus par les photo détecteurs (8) qui mesurent l'énergie reçue point à point.

8. Procédé selon la revendication 7, **caractérisé en ce qu'**un changement de l'état de surface, la présence d'un défaut de forme, d'une irrégularité de la surface de l'objet, ou d'une modification de la couleur de la surface de l'objet est déterminée par la mesure de la variation de l'énergie réfléchie et reçue par au moins deux photo détecteur (8).

9. Procédé selon la revendication 7 ou 8, **caractérisé en ce qu'**il comprend en outre l'étape consistant à déplacer progressivement l'objet (2) le long de l'axe (5) de l'anneau afin d'analyser par scrutation spiralée la totalité de la surface de l'objet.

## Claims

1. A device for analyzing the surface condition of an elongated object such as a wire (2) or similar, comprising:
- a plurality of light sources (4) arranged roughly in a ring in a plane, said sources (4) being designed each to emit a main incident beam (6) oriented towards the axis (5) of the ring, and being arranged so that the main incident beams (6) form with the axis (5) of the ring an angle (α) that is not a right angle and not a zero angle, the object (2) being intended to be placed in the vicinity of said axis (5) such that an area to be analyzed of the surface of said object (2) is placed on the path of the incident beams (6);
- at least three photodetectors (8, 8a, 8b, 8c) located in a plane roughly parallel to the ring of the sources (4), the photodetectors (8) being positioned such that each reflected beam (12) formed by the direct and perfect reflection on the object (2) of an incident beam (6) can be received by at least two of the three photodetectors (8);
**characterized in that** it comprises means intended to provoke the individual and successive activation of the sources (4) in a localized and rotating manner on the ring, in order to generate a rotating incident beam (6) to provoke rotating reflections on the surface of the object (2) towards the photodetectors (8).

2. The device as claimed in claim 1, **characterized in that** it also comprises a lens (9) placed between each photodetector (8) and the point of intersection (7) between the main incident beams (6) and the axis (5) of the ring, to collect the energy reflected by the object (2) and direct it to the photodetectors (8).

3. The device as claimed in claim 1 or 2, **characterized in that** it comprises at least ten sources (4) distributed roughly equidistant in a ring.

4. The device as claimed in one of claims 1 to 3, **characterized in that** it comprises a toric lens (22) placed between the ring of the sources (4) and the axis (5) of the ring, centered on said axis (5), making it possible to concentrate the incident beams (6) into a fine line in the vicinity of the axis (5).

5. The device as claimed in one of claims 1 to 4, **characterized in that** it comprises at least three photodetectors (8, 8a, 8b, 8c) spaced at regular angles to each other.

6. The device as claimed in one of claims 1 to 5, **characterized in that** it comprises a device (16) for acquiring and comparing signals from the photodetectors (8) making it possible to measure the variations of the energy received by the photodetectors (8), locate their origin on the surface of the object (2) and dimension the defects.

7. A method of analyzing the surface condition of an elongated object such as a wire (2) or similar, comprising steps consisting in:
- providing a plurality of light sources (4) placed roughly in a ring, said sources (4) being designed each to emit an incident beam (6) oriented towards the axis (5) of the ring and forming with said axis (5) an angle (α) that is not a right angle and not a zero angle;
- placing the object (2) roughly on the axis (5) of the ring, a roughly annular area to be analyzed of the surface of the object (2) being placed on the path of the incident beams (6);
- providing at least three photodetectors (8, 8a, 8b, 8c) located in a plane roughly parallel to the ring of the sources (4), said photodetectors (8) being positioned so that each reflected beam (12) formed by the direct and perfect reflection on the object (2) of an incident beam (6) can be received by at least two of the three photodetectors (8);
- individually and successively activating the sources (4), in a rotating manner on the ring, to produce a circumferential sweep of the reflections on the surface of the object (2) received by the photodetectors (8) which measure the received energy point-by-point.

8. The method as claimed in claim 7, **characterized in that** a change of the surface condition, the presence of a defect of shape, an irregularity on the surface of the object, or a modification of the color of the surface of the object, is determined by measuring the variation of the energy reflected and received by at least two photodetectors (8).

9. The method as claimed in claim 7 or 8, **characterized in that** it also comprises the step consisting in progressively displacing the object (2) along the axis (5) of the ring in order to analyze all the surface of the object by spiral scanning.

## Patentansprüche

1. Vorrichtung zur Analyse des Zustands der Oberfläche eines länglichen Gegenstands wie ein Draht (2) oder ein analoger Gegenstand, die umfasst:
- eine Vielzahl von Lichtquellen (4), die etwa ringförmig in einer Ebene angeordnet sind, wobei die Quellen (4) imstande sind, jeweils einen einfallenden, zur Achse (5) des Rings gerichteten Hauptstrahl (6) auszusenden, und ausgebildet sind, damit die einfallenden Hauptstrahlen (6) mit der Achse (5) des Rings einen Winkel (α) bilden, der kein rechter Winkel und nicht null ist, wobei der Gegenstand (2) dazu bestimmt ist, in der Nähe der Achse (5) derart platziert zu sein, dass eine zu analysierende Zone der Oberfläche des Gegenstands (2) auf dem Weg der einfallenden Strahlen (6) platziert ist,
- mindestens drei Fotodetektoren (8, 8a, 8b, 8c), die sich in einer Ebene etwa parallel zum Ring der Quellen (4) befinden, wobei die Fotodetektoren (8) derart angeordnet sind, dass jeder reflektierte Strahl (12), der durch die direkte und perfekte Reflexion auf dem Gegenstand (2) eines einfallenden Strahls (6) gebildet wird, von mindestens zwei der drei Fotodetektoren (8) empfangen werden kann,
**dadurch gekennzeichnet, dass** sie Mittel umfasst, die dazu bestimmt sind, die individuelle und aufeinander folgende Aktivierung der Quellen (4) auf lokalisierte und auf dem Ring umlaufende Art und Weise hervorzurufen, um einen umlaufenden einfallenden Stahl (6) zu erzeugen, um umlaufende Reflexe auf der Oberfläche des Gegenstands (2) in Richtung der Fotodetektoren (8) hervorzurufen.

2. Vorrichtung nach Anspruch 1, **dadurch gekennzeichnet, dass** sie weiterhin eine Linse (9) umfasst, die zwischen jedem Fotodetektor (8) und dem Schnittpunkt (7) zwischen den einfallenden Hauptstrahlen (6) und der Achse (5) des Rings angeordnet sind, um die vom Gegenstand (2) reflektierte Energie zu sammeln und sie zu den Fotodetektoren (8) zu lenken.

3. Vorrichtung nach Anspruch 1 oder 2, **dadurch gekennzeichnet, dass** sie mindestens zehn etwa gleichmäßig kreisförmig verteilte Quellen (4) umfasst.

4. Vorrichtung nach einem der Ansprüche 1 bis 3, **dadurch gekennzeichnet, dass** sie eine torische Linse (22) umfasst, die zwischen dem Ring der Quellen (4) und der Achse (5) des Rings zentriert auf der Achse (5) platziert ist, wobei sie es erlaubt, die einfallenden Stahlen (6) in einer dünnen Linie in der Nähe der Achse (5) zu konzentrieren.

5. Vorrichtung nach einem der Ansprüche 1 bis 4, **dadurch gekennzeichnet, dass** sie mindestens drei winklig gleichmäßig voneinander beabstandete Fotodetektoren (8, 8a, 8b, 8c) umfasst.

6. Vorrichtung nach einem der Ansprüche 1 bis 5, **dadurch gekennzeichnet, dass** sie eine Vorrichtung (16) zum Erfassen und zum Vergleichen der Signale der Fotodetektoren (8) umfasst, die es erlaubt, die Schwankungen der von den Fotodetektoren (8) empfangenen Energie zu messen, deren Ursprung auf der Oberfläche des Gegenstands (2) zu lokalisieren und die Fehler zu dimensionieren.

7. Verfahren zur Analyse des Zustands der Oberfläche eines länglichen Gegenstands wie ein Draht (2) oder ein analoger Gegenstand, das darin besteht:
- eine Vielzahl von etwa ringförmig in einer Ebene angeordneten Lichtquellen (4) vorzusehen, wobei die Quellen (4) imstande sind, jeweils einen einfallenden, zur Achse (5) des Rings gerichteten Strahl (6) auszusenden, der mit der Achse (5) einen Winkel (α) bilden, der kein rechter Winkel und nicht null ist,
- den Gegenstand (2) etwa gemäß der Achse (5) des Rings zu platzieren, wobei eine etwa ringförmige zu analysierende Zone der Oberfläche des Gegenstands (2) auf dem Weg der einfallenden Strahlen (6) platziert ist,
- mindestens drei Fotodetektoren (8, 8a, 8b, 8c) vorzusehen, die sich in einer Ebene etwa parallel zum Ring der Quellen (4) befinden, wobei die Fotodetektoren (8) derart angeordnet sind, dass jeder reflektierte Strahl (12), der durch die direkte und perfekte Reflexion auf dem Gegenstand (2) eines einfallen Strahls (6) gebildet wird, von mindestens zwei der drei Fotodetektoren (8) empfangen werden kann,
- individuell und aufeinander folgend die Quellen (4) umlaufend auf dem Ring zu aktivieren, um eine Umfangsabtastung der Reflexe auf der Oberfläche des Gegenstands (2) zu produzieren, die von den Fotodetektoren (8) empfangen werden, die die empfangene Energie Punkt für Punkt messen.

8. Verfahren nach Anspruch 7, **dadurch gekennzeichnet, dass** eine Veränderung des Zustands der Oberfläche, das Vorhandensein eines Formfehlers, einer Unregelmäßigkeit der Oberfläche des Gegenstands oder eine Änderung der Farbe der Oberfläche des Gegenstands durch die Messung der Schwankung der reflektierten und von mindestens zwei Fotodetektoren (8) empfangenen Energie bestimmt wird.

9. Verfahren nach Anspruch 7 oder 8, **dadurch gekennzeichnet, dass** es weiterhin einen Schritt umfasst, der darin besteht, den Gegenstand (2) schrittweise entlang der Achse (5) des Rings zu verschieben, um die Gesamtheit der Oberfläche des Gegenstands durch spiralige Abtastung zu analysieren.
